# EUROPÄISCHE PATENTSCHRIFT

(11) **EP 0 642 048 B1**
(45) Veröffentlichungstag und Bekanntmachung des Hinweises auf die Patenterteilung: **08.04.1998**
(21) Anmeldenummer: 94112859.7
(22) Anmeldetag: 18.08.1994
(51) Int. Cl.: G02B 7/182, G02B 26/06, G02B 26/08

(54) **Spiegelstützsystem mit Kraftmesszellen**
Mirror support system with load cells
Système de support d'un miroir avec pesons

(30) Priorität: 04.09.1993 DE 4329928
(43) Veröffentlichungstag der Anmeldung: 08.03.1995
(73) Patentinhaber: Carl Zeiss, D-89518 Heidenheim (Brenz) (DE)
(72) Erfinder: Meier, Hans-J., D-73431 Aalen (DE)

(56) Entgegenhaltungen:
- DE-C- 3 521 973
- DE-C- 3 908 430
- US-A- 4 500 170
- US-A- 4 588 268
- APPLIED OPTICS, Bd.23, Nr.20, Oktober 1984, NEW YORK US Seiten 3684 - 3690 BUDIANSKY

## Beschreibung

Die Erfindung betrifft ein Spiegelstützsystem nach dem Oberbegriff des ersten Patentanspruchs.

Spiegelstützsysteme werden zum Abstützen eines Spiegelteleskops benötigt, da diese Spiegel sehr groß sind und trotz ihrer beachtlichen Masse sehr präzise in ihrer Lage verändert werden müssen.

Beim Bau von astronomischen Spiegelteleskopen muß zudem dafür Sorge getragen werden, daß der Spiegel in jeder Lage, d.h. unabhängig von der Neigung seiner Fläche zur Richtung der Schwerkraft, seine Form unverändert beibehält. Die üblichen Anforderungen an die Formtreue liegen dabei bei wenigen 10nm RMS.

Außerdem hat die Spiegellagerung die Aufgabe, Deformationen vom Spiegel fernzuhalten, die von der Trägerstruktur eingeleitet werden können. Bei großen Teleskopen können diese Deformationen einige 100µm betragen und somit um mehrere Größenordnungen über der gewünschten Formtreue liegen.

Bisher wurden zur Lagerung solcher Spiegel fast ausschließlich passive Unterstützungssysteme zur Aufnahme der axialen und der radialen Spiegellast verwendet. Bekannte axiale Unterstützungssysteme, wie sie z.B. in den ZEISS-Informationen, 27 (1982) Heft 94, Seite 8-9 beschrieben sind, verteilen die Stützkräfte gleichmäßig durch hinreichend viele einzelne Stützpunkte auf der Rückseite des Spiegels. Anzahl und Anordnung der Stützpunkte hängen von der Größe, dem Gesamtgewicht und der Biegesteifigkeit des Spiegels ab.

Seit geraumer Zeit besteht die Tendenz die Spiegel immer dünner, ihre Fläche jedoch immer größer zu machen. Um die gleichzeitig gestiegenen Ansprüche an die Formtreue der Spiegel trotz verringerter Biegesteifigkeit sicherzustellen, sollen die Spiegel durch gezielt aufgebrachte äußere Kräfte in die korrekte Form gezwungen werden. Hierzu ist bereits vorgeschlagen worden, eine sogenannte "aktive" Lagerung einzusetzen, in der die auf die Stützpunkte des axialen Unterstützungssystems wirkenden Kräfte von einem Computer berechnet und auf die Spiegelrückseite durch Aktuatoren aufgebracht werden, deren Kräfte entsprechend der vom Computer berechneten Verteilung individuell geregelt werden.

Bei richtiger Einstellung der von den Aktuatoren ausgeübten Kräfte kann der Spiegel gezielt im Sinne einer Wiederherstellung der gestörten Formtreue deformiert werden. Dabei können zusätzlich auch Restfehler aus der Bearbeitung der Spiegeloberfläche ausgeglichen werden.

Ein solches Unterstützungssystem ist z.B. aus den Proceedings of the IAU Colloquium No. 79: "Very Large Telescopes, their Instrumentation and Programms" Garching, 9.-12. April 1984, Seite 23-40 bekannt. Die dort vorgeschlagenen Aktuatoren bestehen aus zwei wesentlichen Elementen: einem Sensor, der die auf den jeweiligen Stützpunkt wirkende Teillast des Spiegels mißt, und einer elektromagnetischen Einrichtung in Form eines motorisch angetriebenen Hebelsystems, das die vorausberechnete Kraft aufbringt. Mit Hilfe einer Regeleinrichtung wird der Motor so verstellt, daß die vom Sensor gemessene Kraft einem berechneten Wert entspricht, der sich aus der passiven Grundlast und der für die Deformation nötigen Zusatzkraft zusammensetzt.

Da bei diesem System der zu regelnde Teilbetrag der Stützkraft sehr klein ist und etwa nur 1‰ der Gesamtkraft eines Stützpunktes ausmacht, der zur Kraftsteuerung eingesetzte Sensor aber die Gesamtkraft mißt, werden sehr hohe Anforderungen an Genauigkeit und zeitliche Stabilität des Sensors gestellt, die sich nicht voll erfüllen lassen. Demzufolge ist es schwierig, die vorausberechnete ideale Kraftverteilung tatsächlich auf die Spiegelrückseite aufzubringen. Diese Schwierigkeit ist insbesondere dadurch bedingt, daß eine gezielt aufgebrachte Zusatzkraft an einem Punkt eine Änderung der Kräfte aller anderen Punkte erfordert, die sich nicht von selbst, sondern wiederum nur durch aktive Steuerungen aller anderen Punkte einstellt.

Aus der DE-PS 3 521 973 ist ein Unterstützungssystem für Teleskopspiegel bekannt, das zusätzlich zu der aktiven Lagerung, die mit Hilfe von Aktuatoren auf den Spiegel an den einzelnen Stützpunkten individuell einstellbare Zusatzkräfte aufzubringen erlaubt, eine passive Lagerung in Form eines lastverzweigten hydraulischen Systems vorsieht. Die Aktuatoren sind dort Linearmotoren, die kraftschlüssig mit den Stützen der passiven Lagerung verbunden sind. Das bekannte Unterstützungssystem ist zwar in Bezug auf die Grundlast des Spiegels selbsteinstellend und erfordert lediglich eine Regelung der für die aktive Lagerung nötigen Zusatzkraft. Es besitzt jedoch den Nachteil, daß auch im stationären Zustand Energie in den Linearmotoren an den Unterstützungspunkten umgesetzt wird. Dadurch entstehen lokale Wärmequellen, die den Spiegel und das Unterstützungssystem verformen können.

Aus der DE-PS 3 908 430 ist ein Spiegelstützsystem bekannt, welches über eine Steuerung eine Abstützung eines Spiegels eines Spiegelteleskops realisiert. Dieses System ist zwar sehr flexibel, erfordert aber einen sehr großen Rechenaufwand und reagiert dementsprechend langsam auf Lageveränderungen.

Außerdem sind axiale hydraulische Systeme bekannt, welche für eine Spiegellagerung geeignet sind (siehe z.B. DE-PS 4 021 647).

Es ist die Aufgabe der Erfindung ein Spiegelstützsystem so schaffen, welches eine möglichst schnelle, gleichmäßige Lastenverteilung auf einer Vielzahl von Einzelstützpunkten bei einer Lageveränderung des Spiegels sorgt.

Diese Aufgabe wird erfindungsgemäß durch den kennzeichnenden Teil des ersten Anspruchs gelöst.

Kennzeichnend für diese Erfindung ist, daß die bekannte Steuerung unter Verwendung von Kraftmeßdosen durch eine sehr viel schneller und präziser wirkende Regelung ersetzt wird. Im Vergleich zu hydraulischen Systemen wird zudem eine beachtliche Einsparung an mechanischem Aufwand und eine große Gewichtseinsparung möglich.

Handelt man nach der Erfindung, so erhält man eine statisch bestimmte 3-Punktlagerung mit einer gleichmäßigen Lastverteilung auf einer Vielzahl von Einzelstützpunkten. Jede Veränderung der Kräfte am Spiegel führt zu einer Differenz zwischen dem Meßsignal der Kraftmeßdosen an den festen Lagern und mindestens einem Meßsignal der Kraftmeßdosen an den Einzelstützpunkten mit den kraftvariablen Betätigungsgliedern. Aus dieser Differenz ergibt sich ein Veränderungssignal für das betreffende kraftvariable Betätigungsglied am Einzelstützpunkt, damit diese Differenz verschwindet. Dabei dient für alle Einzelstützpunkte das Meßsignal an den drei festen Lagern als Bezugsgröße. Die Regelung erfolgt dabei in drei Gruppen mit jeweils einem festen Lager, d.h. gruppenweise.

Jedes Betätigungsglied kann dabei seinen eigenen Regler haben oder es kann auch ein Regler pro Gruppe verwendet werden.

Durch eine zusätzliche Steuerungseinrichtung, welche über eine Eingabeeinheit verfügen kann, kann die passive Spiegellagerung sehr einfach in eine aktive Spiegellagerung verändert werden, ohne daß man auf den Vorteil der schnellen Regelung verzichten muß.

Eine laterale Drehsicherung erfolgt vorzugsweise an den festen Lagern.

Die Erfindung wird nachstehend in beispielhafter Weise anhand der Figuren näher erläutert, wobei weitere erfinderische Merkmale sowie dem besseren Verständnis dienende Erläuterungen und Ausgestaltungsmöglichkeiten des Erfindungsgedankens beschrieben sind.

Dabei zeigen
- Figur 1: eine erste Variante eines erfindungsgemäßen passiven Spiegelstützsystems auf der Spiegelrückseite;
- Figur 2: eine zweite Variante eines erfindungsgemäßen passiven Spiegelstützsystems auf der Spiegelrückseite;
- Figur 3: eine seitliche Ansicht des Spiegelstützsystems; und
- Figur 4: eine mögliche Variante des erfindungsgemäßen Spiegelstützsystems auf der Spiegelrückseite für eine aktive Spiegellagerung.

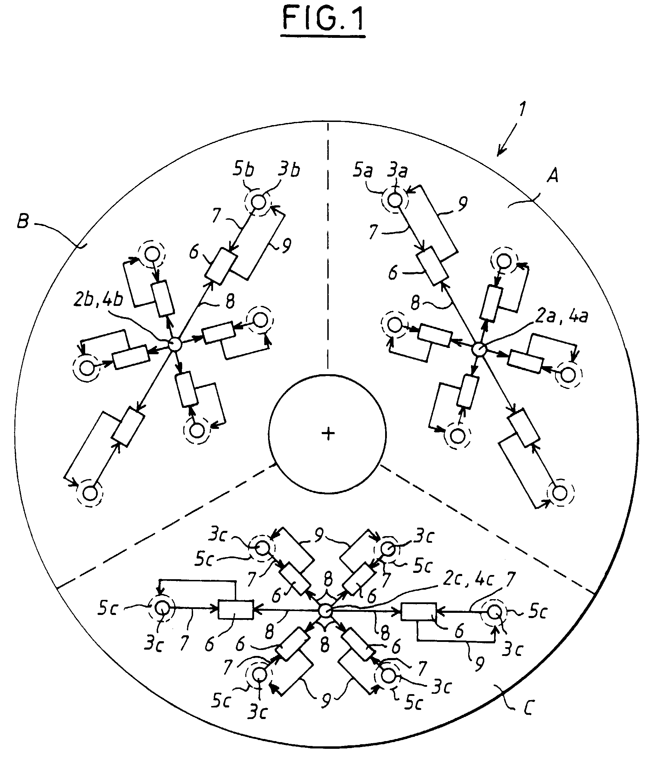

In Figur 1 ist schematisch die Verteilung der Angriffspunkte der drei festen Lager (2a, 2b, 2c) als auch der kraftvariablen Betätigungsglieder (3a, 3b, 3c) in einem Winkel von ungefähr 120° auf der Unterseite des zu stützenden Spiegels (1) dargestellt.

Sowohl bei den festen Lagern (2a, 2b, 2c), welche starr über eine Kraftmeßdose (4a, 4b, 4c) mit der Unterseite des Spiegels (1) verbunden sind, als auch bei den kraftvariablen Betätigungsliedern (3a, 3b, 3c), welche über eine weiche Feder (in den Figuren nicht dargestellt) mit der Unterseite des Spiegels (1) verbunden sind, sind Kraftmeßdosen (4a, 4b, 4c; 5a, 5b, 5c) angebracht, welche den auf sie wirkenden Gewichtsanteil des Spiegels (1) messen. Die Vorspannung der Federn der kraftvariablen Betätigungsglieder (3a, 3b, 3c) kann nach bekanntem Stand der Technik durch ein Stellglied positiv oder negativ variiert werden.

Da gemäß der Erfindung die Differenz des Meßsignals der Kraftmeßdose (4a, 4b, 4c) des festen Lagers (2a, 2b, 2c) in Relation zu dem Meßsignal einer jeden der Kraftmeßdose (5a, 5b, 5c) an jedem der einzelnen kraftvariablen Betätigungsglieder (3a, 3b, 3c) gemessen werden soll, befindet sich zwischen der Kraftmeßdose (5a, 5b, 5c) des festen Lagers (2a, 2b, 2c) und jeder der Kraftmeßdosen (5a, 5b, 5c) an den einzelnen kraftvariablen Betätigungsgliedern (3a, 3b, 3c) ein Dreipunkt- (Plus/Minus-) Regler (6).

Die kraftvariablen Betätigungsglieder (3a, 3b, 3c) unterteilen sich in drei Gruppen (A, B, C), wobei zu jeder Gruppe je ein festes Lager (2a, 2b, 2c) gehört.

Dabei sind die kraftvariablen Betätigungsglieder (3a, 3b, 3c) um das jeweilige feste Lager (2a, 2b, 2c) angeordnet, wie in der Fig. 1 dargestellt.

Von jedem kraftvariablen Betätigungsglied (3a, 3b, 3c) geht eine Meßsignalleitung (7) zu dem, diesem Betätigungsglied (3a, 3b, 3c) zugeordneten Regler (6). Jeweils eine weitere Meßsignalleitung (8) für jeden Regler (6) in einer Gruppe (A, B, C) ist dem jeweiligen festen Lager zugeordnet.

Die aus den beiden Meßsignalleitungen (7, 8) kommenden Signale, welche eine Information über die am jeweiligen Angriffspunkt angreifende Kraft beinhalten, werden im jeweiligen Regler (6) miteinander verglichen.

Weichen diese Signale voneinander ab, so wird am Ausgang des Reglers (6) ein Signal erzeugt, dessen Signalhöhe abhängig ist von der Differenz der beiden Meßwerte der Kraftmeßdose (5a, 5b, 5c) am entsprechenden kraftvariablen Betätigungsglied (3a, 3b, 3c) und der Kraftmeßdose (4a, 4b, 4c) des zur entsprechenden Gruppe (A, B, C) gehörenden festen Lagers (2a, 2b, 2c). Dieses Signal wird über eine dritte Meßsignalleitung (9) zum entsprechenden kraftvariablen Betätigungsglied (3a, 3b, 3c) zurückgeführt und veranlaßt das Betätigungsglied (3a, 3b, 3c) zu einer Bewegung, um die Differenz zwischen den beiden Meßsignalen von den Kraftmeßdosen (5a, 5b, 5c, 4a, 4b, 4c) am kraftvariablen Betätigungsglied (3a, 3b, 3c) und am festen Lager (2a, 2b, 2c) zu verringern. Erst wenn diese Differenz zu Null wird, hört dieser Regelungsvorgang auf. Dann liegt auf der Kraftmeßdose (5a, 5b, 5c) des kraftvariablen Betätigungsgliedes (3a, 3b, 3c) und auf der Kraftmeßdose (4a, 4b, 4c) des festen Lagers (2a, 2b, 2c) die gleiche Kraft an und der Spiegel (1) wird durch die beiden Angriffspunkte optimal unterstützt.

Da dieser Regelungsvorgang gleichermaßen an allen Reglern (6) erfolgt, ist durch das erfindungsgemäße Spiegelunterstützungssystem jederzeit sichergestellt, daß an allen Angriffspunkten einer Gruppe (A, B, C) dieselbe Gewichtskraft wirkt.

Die Differenzbildung im Regler (6) erfolgt sehr schnell, so daß die Regelzeit nur von den dynamischen Bedingungen der kraftvariablen Betätigungsglieder (3a, 3b, 3c) abhängt. Je schneller die Betätigungsglieder (3a, 3b, 3c) sich unter Last bewegen können, um so schneller wird der Spiegel (1) nach einer Laständerung wieder optimal unterstützt.

Der Meßvorgang ist dabei denkbar einfach und kann wie folgt beschrieben werden. Nimmt man beispielsweise an, daß das zu unterstützende Gewicht des Spiegels (1) 27 Tonnen beträgt und sich der Spiegel (1) in der horizontalen befindet, so muß jede Gruppe (A, B, C) aus einem festen Lager (2a, 2b, 2c) und einer beliebigen, nur durch die räumlichen Verhältnisse unterhalb des Spiegels (1) begrenzten Anzahl von kraftvariablen Betätigungsglieder (3a, 3b, 3c) ein Drittel des Gewichts des Spiegels (1) aufnehmen, also beträgt in diesem Beispiel die aufzubringende Gruppenstützkraft 9t.

Beträgt nun die Anzahl der kraftvariablen Betätigungsglieder (3a, 3b, 3c) abweichend von den in der Fig. 1 dargestellten Verhältnissen (zur leichteren Rechnung) acht, so stellt jede Gruppe neun Angriffspunkte zur Unterstützung an der Unterseite des Spiegels (1) zur Verfügung. Dies bedeutet, bei gleichmäßiger Lastverteilung, daß eine Last von einer Tonne an jedem Angriffspunkt (drei feste Lager und 24 kraftvariable Betätigungsglieder) anliegt.

Bei einer Kippung des Spiegels (1) aus der horizontalen Position verändert sich diese gleichmäßige Lastverteilung. Nimmt man an, daß zwei feste Lager (2a, 2b) nun stärker belastet werden, während das dritte feste Lager (2c) entlastet wird, so wird der Regelungsvorgang wie oben beschrieben dafür sorgen, daß alle kraftvariablen Betätigungsglieder gungsglieder (3a, 3b, 3c) sich entsprechend des zu einer Gruppe (A, B, C) gehörenden festen Lagers (2a, 2b, 2c) in ihrer Stellung ändern, so daß in einer Gruppe (A, B, C) wieder an allen Angriffspunkten aus festem Lager (2a, 2b, 2c) und Betätigungsgliedern (3a, 3b, 3c) dieselbe Last angreift.

Die Regler (6) in der Figur 1 können dabei aus handelsüblichen Differenzverstärkern (z.B. Operationsverstärkern) bestehen, welche entsprechend dem bekannten Stand der Technik zu beschalten sind. Die kraftvariablen Betätigungsglieder (3a, 3b, 3c) sind auch aus dem Stand der Technik bestens bekannt. Das gleiche gilt für die zu verwendenden Kraftmeßdosen (4a, 4b, 4c, 5a, 5b, 5c). Diese sollten einen Dynamikbereich von wenigen Gramm bis ungefähr 200 Kilogramm besitzen.

Der besondere Vorteil des oben beschriebenen Spiegelstützsystems ist darin zu sehen, daß es sich selbsttätig auf jede Veränderung des axialen Spiegelgewichts (in einer anderen Elevationslage) anpaßt, und ebenfalls unterschiedliche Lagerkräfte zwischen verschiedenen Gruppen (A, B, C) aufnehmen kann, wie sie z.B. bei Drehbeschleunigungen des Spiegels (1) vertikal zu seiner Achse entstehen.

Das oben beschriebene Spiegelstützsystem ist eine passive Spiegellagerung und leistet damit dasselbe wie die bekannten hydraulischen Spiegellagerungen, wobei eine beachtliche Einsparung an mechanischem Aufwand erfolgt. Die direkt gemessene Stützkraft am festen Lager (2a, 2b, 2c) (Festpunkt) ergibt sich bei diesem Beispiel als Summe aller Stützkräfte an allen Angriffspunkten ( Lagerpunkten) einer Gruppe (A, B, C), dividiert durch die Anzahl der Lagerpunkte einer Gruppe (A, B, C). An den festen Lagern (2a, 2b, 2c) ist eine nach bekanntem Stand der Technik (in den Figuren nicht dargestellt) aufgebaute laterale Drehsicherung vorhanden.

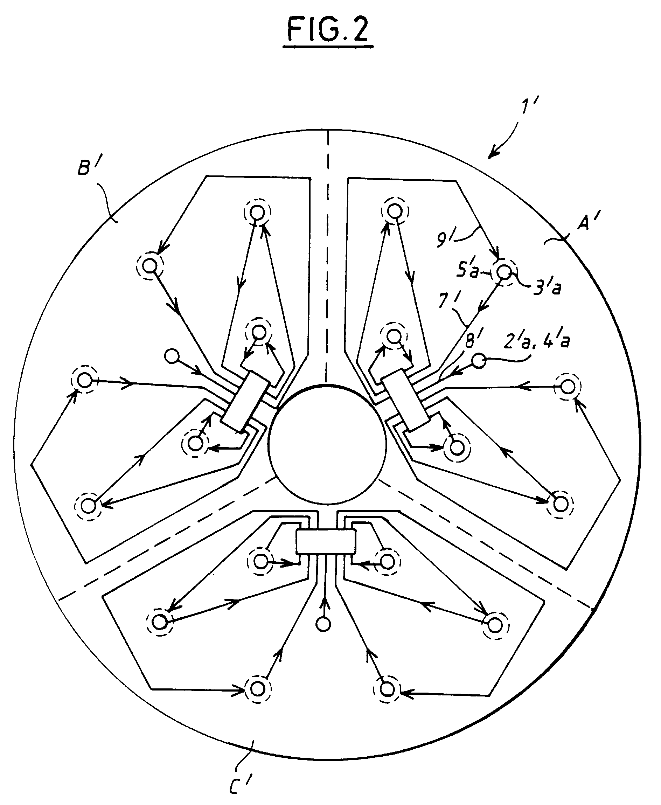

Die in Figur 2 schematisch dargestellte zweite Variante der passiven Lagerung des Spiegels (1) unterscheidet sich nur in einem Detail von der in Figur 1 dargestellten Variante.

Im Gegensatz zu Figur 1 gehen in Figur 2 alle Meßsignalleitungen (7', 8') einer Gruppe (A', B', C') zu einem Regler (6'). Dieser ist so geschaltet, daß er die von den einzelnen kraftvariablen Betätigungsgliedern (3'a) einer Gruppe kommenden Meßsignale aus den Kraftmeßdosen (5'a) nacheinander mit dem Meßsignal der Kraftmeßdose (4'a) des festen Lagers (1) vergleicht und dann entsprechende Korrektursignale über die jeweilige Signalleitung (9') an das jeweilige Betätigungsglied (3'a) zurücksendet. Der Regelvorgang ist derselbe wie zu Figur 1 beschrieben und auch hier sind die drei Gruppen (A', B', C') identisch aufgebaut.

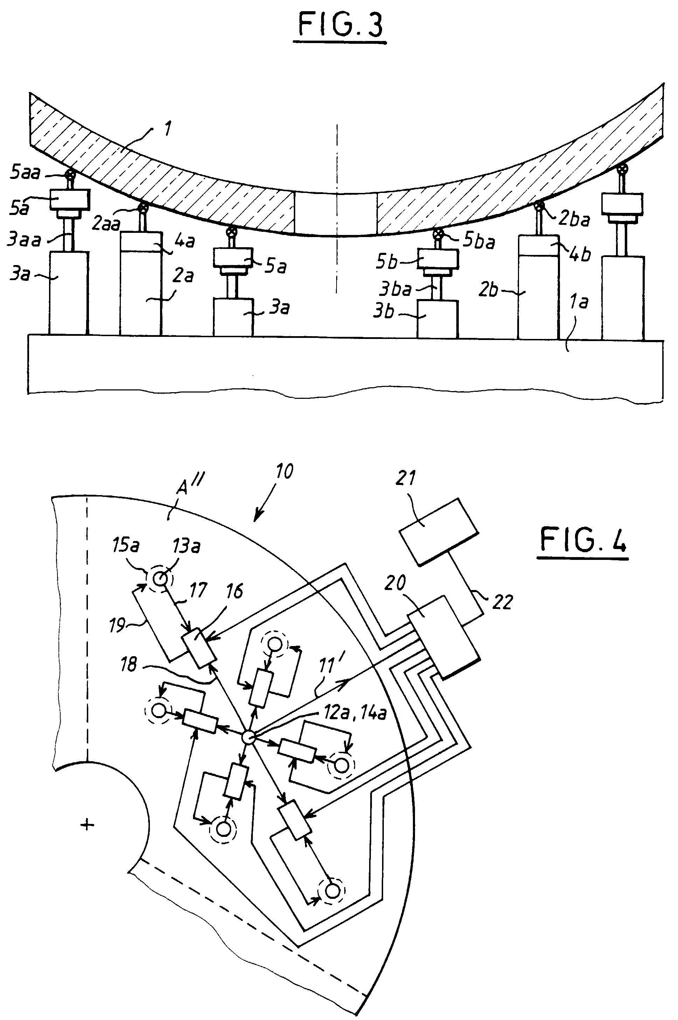

In Figur 3 ist nun das Spiegelstützsystem in einer schematischen Ansicht seitlich dargestellt.

Der Spiegel (1) ist an seiner Unterseite über Lager (2aa, 2ba, 5aa, 5ba) sowohl mit den festen Lagern (2a, 2b) als Fixpunkten als auch mit den kraftvariablen Betätigungsgliedern (3a, 3b) verbunden. Gegengelagert werden die festen Lager (2a, 2b) als auch die Betätigungsglieder (3a, 3b) auf einer Spiegelhaltezelle (1a).

Zwischen dem Lager (2aa, 2ba) und dem festen Lager (2a, 2b) ist eine Kraftmeßdose (4a) angeordnet, welche die Stützkraft an diesem Angriffspunkt durch das feste Lager (2a, 2b) mißt. Eine entsprechende Kraftmeßdose (5a) ist auch zwischen dem Lager (5aa, 5ba) und dem kraftvariablen Betätigungsglied (3a, 3b) zur Messung der hier wirkenden Stützkraft angeordnet.

Die kraftvariablen Betätigungsglieder (3a, 3b) erlauben je nach anliegendem Regelungssignal eine Bewegung eines Aktuators (3aa, 3ab) nach oben oder unten. Diese Betätigungsglieder (3a, 3b) sind aus dem bekannten Stand der Technik bestens bekannt und bestehen beispielsweise aus Linearmotoren oder Hebelsystemen.

Während die in den Figuren 1 und 2 dargestellten Varianten des Spiegelstützsystems als passive Spiegellagerungen arbeiten, bedarf es nur der in Figur 4 dargestellten leichten Veränderung, um eine aktive Spiegellagerung zu erhalten.

Auch bei dem erfindungsgemäßen aktiven Stützsystems des Spiegels (10) gibt es drei Gruppen (A''; B'' und C'' sind genauso aufgebaut wie A'' und in der Figur 4 deshalb nicht dargestellt) mit jeweils einem festen Lager (12a) mit Kraftmeßdose (14a) sowie einer variablen, den jeweiligen räumlichen und gewichtsmäßigen Verhältnissen anzupassenden Anzahl von kraftvariablen Betätigungsgliedern (13a) mit Kraftmeßdosen (15a).

Die Meßsignalleitung (18) der Kraftmeßdose (14a) am festen Lager (12) sowie die Meßsignalleitung (17) der Kraftmeßdose eines Betätigungsgliedes (13a) gehen auf den dazugehörigen Regler (16).

Dieser Regler (16) besitzt aber einen zusätzlichen Eingang, über welchen ein zusätzliches Signal über eine Signalleitung (11) von einer Steuerungseinrichtung (20) auf den Regler (16) gegeben werden kann. Dieses zusätzliche Signal dient lediglich der aktiven Formkorrektur des Spiegels (10) und ist deshalb von der Lagerkraft am festen Lager (12a) unabhängig.

Um aber auch gewichtsbedingte Deformationen des Spiegels (10) berücksichtigen zu können, kann die Auflagekraft als Meßwertsignal der Kraftmeßdose (14a) des festen Lagers (12a) der Steuerungseinrichtung (20) über die Meßsignalleitung (11') mitgeteilt werden.

Die Steuerungseinrichtung (20) ist über ein Kabel (22) mit einer Eingabeeinrichtung (21) (z. B. eine Tastatur) verbunden, um eine gewünschte aktive Spiegeldeformation einstellen zu können.

Die Steuerungseinrichtung (20) besteht im wesentlichen aus einer CPU, einer Speichervorrichtung und einer Signalerzeugungseinrichtung, um für jedes kraftvariable Betätigungsglied (13a) ein entsprechendes Deformationssignal zu erzeugen. Eine dementsprechende Steuerungseinrichtung ist aus dem bekannten Stand der Technik bestens bekannt.

Das für jedes Betätigungsglied (13a) (natürlich nicht für das feste Lager (12a)) individuell erzeugte Deformationssignal aus der Steuerungseinrichtung (20) gelangt über eine Signalleitung (11) an den entsprechenden Regler (16) und wird in diesem dem Signal von der Kraftmeßdose (14a) des festen Lagers (12a) hinzuaddiert. Dies bedeutet im Endeffekt eine Addition oder eine Subtraktion des Einstellwertes für das Betätigungsglied (13a) je nach Vorzeichen des Deformationssignals (bzw. Korrektursignals) durch die Steuerungseinrichtung (20) erfolgt.

Die Stützkraft am festen Lager (12a) (bzw. Festpunkt), welche sich als Summe aller Stützkräfte einer Gruppe (A'', B'', C'') dividiert durch die Anzahl der Angriffs- bzw. Lagerpunkte (inklusive festes Lager) ergibt, wird somit nur noch als numerischer Wert benutzt. Zwischen diesem numerischen Wert muß bei der Benützung der Steuerungseinrichtung (20) zur aktiven Lagerung des Spiegels (10) (und nur genau dann) die Differenz zur Summe aller anderen Angriffspunkte der Gruppe gebildet werden, will man nun die Lagerkraft am festen Lager (12a) wissen.

Der beschriebene Regler (16) kann beispielsweise in Hardware leicht durch einen nach dem bekannten Stand der Technik entsprechend beschalteten Operationsverstärker realisiert werden.

Im Resultat entstehen keinerlei Einschränkungen für die Wahl der Stützkraft an allen Angriffspunkten, außer der, daß am festen Lager (12a) die Stützkraft nicht fast oder genau Null werden darf, da sonst die statisch stabile Dreipunktlagerung des Spiegels (10) nicht mehr gewährleistet ist.

## Patentansprüche

1. Spiegelstützsystem zum Abstützen eines Spiegels (1) eines Spiegelteleskops, bei dem
- zwischen einer Spiegelhaltezelle (1a) und der Unterseite des Spiegels (1;1'; 10) mindestens drei Gruppen (A, B, C; A', B', C'; A'') von kraftvariablen Betätigungsgliedern (3a, 3b, 3c; 3a', 3b', 3c'; 13a) angeordnet sind, um den Spiegel (1; 1'; 10) zumindest axial abzustützen,
- zwischen dem Spiegel (1; 1'; 10) und jedem diesen Betätigungsgliedern (3a, 3b, 3c; 3a', 3b', 3c'; 13a) jeweils eine Kraftmeßdose (5a, 5b, 5c; 5a', Sb', 5c'; 15a) zum Erfassen der axialen Stützkraft angeordnet ist,
- zwischen der Spiegelhaltezelle (1a) und der Unterseite des Spiegels (1; 1'; 10) zusätzlich zu jeder Gruppe von kraftvariablen Betätigungsgliedern ein festes Lager (2a, 2b, 2c; 2'a, 2'b, 2'c; 12a) zum starren axialen Abstützen des Spiegels (1; 1'; 10) angeordnet ist, wobei die festen Lager zusammen für eine Dreipunktlagerung des Spiegels (1; 1', 10) sorgen,
- je eine feststehende Kraftmeßdose (4a, 4b, 4c; 4'a, 4'b, 4'c; 14a) zum Erfassen der Axialkraft an jedem der festen Lager (2a, 2b, 2c; 2'a, 2'b, 2'c; 12a) angebracht ist,
- eine Meßsignalleitung (8; 8'; 18) zur Weiterleitung eines Signals von jeweils einer feststehenden Kraftmeßdose (4a, 4b, 4c; 4'a, 4'b, 4'c; 14a) einer Gruppe und jeweils eine Meßsignalleitung (7; 7'; 17) zur Weiterleitung eines Signals von den zu einer Gruppe (A, B, C; A', B', C'; A'') gehörenden Kraftmeßdose (5a, 5b, 5c; 5a', 5b', 5c'; 15a) des jeweiligen kraftvariablen Betätigungsglieds (3a, 3b, 3c; 3a', 3b', 3c'; 13a) zu einem Regler (6; 6', 16) geführt ist, und
- eine Signalleitung (9; 9'; 19) ein Ausgangssignal des Reglers (6; 6', 16) zum jeweiligen kraftvariablen Betätigungsglied (3a, 3b, 3c; 3a', 3b', 3c'; 13a) zurückführt,
dadurch gekennzeichnet,
daß dieser Regler (6; 6', 16) derart ausgestattet ist, daß das Ausgangssignal über eine Differenzbildung zwischen dem Signal der feststehenden Kraftmeßdose (4a, 4b, 4c; 4'a, 4'b, 4'c; 14a) und dem Signal des jeweiligen kraftvariablen Betätigungsglieds (3a, 3b, 3c; 3a', 3b', 3c'; 13a) erzeugt wird und das jeweils damit angesteuerte kraftvariable Betätigungsglied so lange zu einer Ausgleichsbewegung veranlasst wird, bis das Ausgangssignal des Reglers (6; 6', 16) Null wird.

2. Spiegelstützsystem nach Anspruch 1, bei dem für die kraftvariablen Betätigungsglieder (3a, 3b, 3c; 3a', 3b', 3c'; 13a) einer Gruppe (A, B, C; A', B', C'; A") jeweils ein Regler (6; 6', 16) vorhanden ist.

3. Spiegelstützsystem nach einem der Ansprüche 1 oder 2, bei dem zusätzlich eine Steuerungseinrichtung (20) vorhanden ist, welche wahlweise zur Addition mit dem numerischen Wert des Signals der Kraftmeßdose (14a) des festen Lagers (12a) ein für jedes kraftvariable Betätigungsglied (13a) unterschiedliches Signal am Eingang des Reglers (16) zur Verfügung stellt.

4. Spiegelstützsystem nach Anspruch 3, bei dem für die Steuerungseinrichtung (20) eine Eingabeeinrichtung (21) vorhanden ist.

5. Spiegelstützsystem nach einem der Ansprüche 1 bis 4, bei dem an den festen Lagern (2a, 2b, 2c; 2'a, 2'b, 2'c; 12a) zusätzlich eine laterale Drehsicherungseinrichtung vorhanden ist.

## Claims

1. Mirror support system for supporting the mirror (1) of a mirror telescope, in which
- a minimum of three groups (A, B, C; A', B', C'; A") of force-variable control components (3a, 3b, 3c; 3a', 3b', 3c'; 13a) are arranged between a mirror retaining cell (1a) and the lower side of mirror (1; 1'; 10) to provide at least axial support for mirror (1; 1', 10);
- one force-sensing device (5a, 5b, 5c, 5a', 5b', 5c') is located between mirror (1, 1', 10) and each of these control components (3a, 3b, 3c; 3a', 3b', 3c'; 13a) respectively, for determining the axial supporting force;
- additionally to each group of force-variable control components, a rigid bearing (2a, 2b, 2c, 2'a, 2'b, 2'c, 12a) providing rigid axial support for mirror (1, 1', 10) is arranged between the mirror retaining cell (1a) and the lower side of mirror (1; 1'; 10), with the rigid bearings together supporting the mirror (1, 1', 10) in three points;
- each of the rigid bearings (2a, 2b, 2c, 2'a, 2'b, 2'c, 12a) is equipped with one permanently mounted force-sensing device (4a, 4b, 4c, 4'a, 4'b, 4'c, 14a) for determining the axial forces;
- one measuring signal line each (8; 8'; 18) for transmitting a signal from each of the fixed force-sensing devices (4a, 4b, 4c, 4'a, 4'b, 4'c, 14a) of one group and one measuring signal line each (7; 7'; 17) for transmitting a signal from the force-sensing devices (5a, 5b, 5c, 5'a, 5'b, 5'c, 15a) belonging to one group (A, B, C; A', B', C'; A") of the respective force-variable control components (3a, 3b, 3c; 3a', 3b', 3c'; 13a) is conducted to a control system (6, 6', 16), whereby this control system (6, 6', 16) is designed so that an output signal is generated by obtaining the difference between the signal from the permanently mounted force-sensing device (4a, 4b, 4c, 4'a, 4'b, 4'c, 14a) and the signal from the respective force-variable control component (3a, 3b, 3c; 3a', 3b', 3c'; 13a);
- a signal line (9, 9', 19) feeds back an output signal from control system (6, 6', 16) to the respective force-variable control component (3a, 3b, 3c; 3a', 3b', 3c'; 13a), so that the respective force-variable control component (3a, 3b, 3c; 3a', 3b', 3c'; 13a) is thereby activated to perform a balancing motion until the output signal of the control system (6, 6', 16) is reset to zero.

2. Mirror support system according to claim 1, in which one control system (6, 6', 16) exists for each of the force-variable control components (3a, 3b, 3c; 3a', 3b', 3c'; 13a) of one group (A, B, C; A', B', C'; A").

3. Mirror support system according to claim 1 or 2, featuring an additional control system (20) which provides a different signal for each force-variable control component (13a) at the input of controller (16), to be optionally added to the numerical value of the signal of the force-sensing device (14a) of the rigid bearing (12a).

4. Mirror support system according to claim 3, in which an input device (21) is provided for the control system (20).

5. Mirror support system according to one of the claims 1 to 4, in which an additional, lateral anti-rotation mechanism is provided on the rigid bearings (2a, 2b, 2c, 2'a, 2'b, 2'c, 12a).

## Revendications

1. Un système de sustentation de miroir pour supporter le miroir (1) d'un télescope, tel que
- trois groupes au minimum (A, B, C,; A', B', C'; A") d'organes d'activation de force variable (3a, 3b, 3c; 3a', 3b', 3c'; 13a) sont disposés entre une semelle de contrebutement (1a) et la face postérieure du miroir (1; 1'; 10), afin de soutenir le miroir (1; 1'; 10) au moins axialement,
- qu'un capteur dynamométrique (5a, 5b, 5c; 5a', 5b', 5c'; 15a) est intercalé respectivement entre le miroir (1; 1'; 10) et chacun de ces organes d'activation (3a, 3b, 3c; 3a', 3b', 3c'; 13a), afin d'enregistrer la force d'appui axiale,
- qu'un palier fixe (2a, 2b, 2c; 2'a, 2'b, 2'c; 12a) est aménagé en plus de chaque groupe d'organes d'activation entre la semelle de contrebutement (1a) et la face postérieure du miroir (1; 1'; 10) en vue d'une sustentation axiale rigide du miroir (1; 1'; 10), si bien que ces paliers fixes assurent conjointement le support à trois points du miroir (1; 1'; 10),
- qu'un capteur dynamométrique fixe (4a, 4b, 4c; 4'a, 4'b, 4'c; 14a) est adapté respectivement à chacun des paliers fixes (2a, 2b, 2c; 2'a, 2'b, 2'c; 12a), afin d'en relever la force axiale,
- qu'une ligne (8; 8'; 18) d'acheminement d'un signal en provenance respectivement d'un capteur dynamométrique fixe (4a, 4b, 4c; 4'a, 4'b, 4'c; 14a) d'un groupe et qu'une ligne (7; 7'; 17) respectivement destinée à transmettre un signal émis par le capteur dynamométrique (5a, 5b, 5c; 5a', 5b', 5c'; 15a) de chaque organe d'activation de force variable (3a, 3b, 3c; 3a', 3b', 3c'; 13a), associé à un groupe (A, B,C; A', B', C'; A"), sont reliées à un régulateur (6; 6'; 16),
- qu'une ligne (9; 9'; 19) renvoie un signal de sortie du régulateur (6; 6'; 16) à chaque organe d'activation de force variable (3a, 3b, 3c; 3a', 3b', 3c'; 13a),
caractérisé en ce que ce régulateur (6; 6', 16) est équipé de telle manière que le signal de sortie est produit à partir de la différence établie entre le signal du capteur dynamométrique fixe (4a, 4b, 4c; 4'a, 4'b, 4'c; 14a) et le signal de l'organe d'activation respectif de force variable (3a, 3b, 3c; 3a', 3b', 3c'; 13a) et que chaque organe d'activation de force variable ainsi sollicité est soumis à une opération corrective jusqu'à ce que le signal de sortie du régulateur (6; 6'; 16) atteigne zéro.

2. Système de sustentation de miroir selon la revendication 1, tel qu'un régulateur (6; 6'; 16) est affecté respectivement aux organes d'activation de force variable (3a, 3b, 3c; 3a', 3b', 3c'; 13a) d'un groupe (6; 6'; 16).

3. Système de sustentation de miroir selon l'une des revendications 1 ou 2, tel qu'une unité de commande (20) est adjointe pour libérer un signal différent selon l'organe d'activation de force variable (13a) à l'entrée du régulateur pour être additionné sélectivement à la valeur numérique du signal délivré par le capteur dynamométrique (14a) du palier fixe (12a).

4. Système de sustentation de miroir selon la revendication 3, tel qu'une unité d'entrée (21) est prévue pour être connectée à l'unité de commande (20).

5. Système de sustentation de miroir selon l'une des revendications de 1 à 4, tel qu'un dispositif de butée de la rotation latérale est aménagé en supplément sur les paliers fixes (2a, 2b, 2c; 2'a, 2'b, 2'c; 12a).
